# EUROPEAN PATENT SPECIFICATION

(11) **EP 1 369 607 B1**
(45) Date of publication and mention of the grant of the patent: **05.07.2017**
(21) Application number: 03010310.5
(22) Date of filing: 07.05.2003
(51) Int. Cl.: F16C 29/06, C10M 169/02

(54) **Lubricant supplying device**
Schmiermittelfördereinrichtung
Dispositif d'alimentation en lubrifiant

(30) Priority: 31.05.2002 JP 2002160108
(43) Date of publication of application: 10.12.2003
(73) Proprietor: THK CO., LTD., Shinagawa-ku, Tokyo 141-8503 (JP)
(72) Inventor: Yatsushiro, Daisuke, Nakakoma-gun, Yamanashi (JP); Yoshino, Masahiko, Nakakoma-gun, Yamanashi (JP); Honma, Mitsuaki, Shinagawa-ku, Tokyo (JP)
(74) Representative: Vossius & Partner Patentanwälte Rechtsanwälte mbB

(56) References cited:
- EP-A- 0 359 466
- EP-A- 0 950 465
- EP-A- 1 005 951
- US-A- 3 939 082
- US-A- 5 246 604

## Description

The present invention relates to a lubricant supplying device for supplying a lubricant to rolling faces on a slide member side, the rolling faces on a track shaft side and a rolling element running between them in a linear guiding apparatus, curve guiding apparatus or other guiding apparatus such as a ball screw or a ball spline in which a slide member and a track shaft move relative to each other by means of a rolling element such as a ball or roller, to a guiding apparatus including the same and to lubricating grease for use in the same.

Heretofore, as this type of guiding apparatus, there has been proposed a guiding apparatus provided with a lubricant supplying device, which includes: a lubricant coater for applying a lubricant to the rolling faces of a track shaft by contacting the rolling faces of the track shaft; a lubricant absorber, provided next to the lubricant coater, for absorbing and holding a lubricant as well as supplying it to the lubricant coater; and supply amount control means for controlling the amount of the lubricant to be supplied to the lubricant coater from the lubricant absorber (for example, JP H10-184683 A and JP H11-303866 A).

In the above lubricant supplying device, the amount of the lubricant to be supplied from the lubricant absorber to the lubricant coater is limited by making the material of the lubricant absorber different from the material of the lubricant coater, or an oil amount adjusting film or oil amount adjusting plate for adjusting the amount per unit time of the lubricant to be moved is provided between the lubricant occluding body and the lubricant coater, for example, as means of controlling the supply amount of the lubricant in order to control the amount of the lubricant to be supplied from the above lubricant absorber to the lubricant coater, to supply a predetermined amount of the lubricant held by the lubricant absorber in large quantities to the lubricant coater, and to stabilize the amount of the lubricant to be applied to the rolling face of the track shaft from the lubricant coater for a long period of time. Accordingly, the guiding apparatus can be driven maintenance-free for a long period of time.

As semiconductor production apparatuses and general industrial machines are becoming smaller and smaller in size, a small-sized guiding apparatus to be mounted to these apparatuses is now in demand. Along with this, even in a lubricant supplying device, the amount of a lubricant held by a lubricant absorber has to be small and the amount per unit time of the lubricant to be supplied from the lubricant absorber to the lubricant coater has to be extremely small. With the above-mentioned conventional lubricant supply amount control means, the amount of the lubricant to be supplied from the lubricant absorber to the lubricant coater cannot be controlled to a satisfactory extent, thereby making it difficult to drive the guiding apparatus maintenance-free for a long period of time.

To cope with this, the inventors of the present invention have conducted intensive studies on a lubricant supplying device which can control as accurately as possible the amount per unit time of a lubricant to be supplied even when the amount per unit time of the lubricant to be supplied from a lubricant accommodating chamber to a lubricant coater is very small and which can stably apply a predetermined amount of the lubricant to a surface to be coated such as the rolling faces of the track shaft and/or slide member of a guiding apparatus from the lubricant coater for a long period of time even when the feeder is made small in size so as to be mountable to a small-sized guiding apparatus. As a result, they have found that the above object can be attained by using lubricating grease which contains 0.05 to 4 wt% of a thickener in lubricating base oil as the lubricant to be stored in the lubricant accommodating chamber and that a guiding apparatus can thereby be driven maintenance-free for a long period of time.

EP 1 005 951 A relates to a linear motion guide unit in which rolling applicators transfer lubricant from a lubricant-containing member to raceway grooves on a track rail. The guide unit has a case accommodating therein the lubricant-containing member, and rolling applicators supported for rotation by a bearing member in the case. The lubricant held in the lubricant-containing member is applied onto the raceway grooves on the track rail through the rolling applicators, the peripheries of which are kept in sliding contact with the lubricant-containing member, thereby lubricating the confronting raceway grooves of the track rail and the sliding element, along which rolling elements run through in the sliding element.

EP 0 950 465 A relates to a lubricant supplying apparatus for a linear motion apparatus such as a linear guide unit and a ball screw unit, always capable of coating all rolling body rolling grooves formed on a track shaft with an equal amount of lubricant. A lubricant supplying system comprises a casing fixed to the slide member, a plurality of coating portions which are protruded from plural positions of the casing so that they are in contact with the track shaft for coating the track shaft with lubricant and a lubricant accommodating chamber provided in the casing for supplying lubricant to the coating portions, wherein the plurality of the coating portions are divided into groups consisting of one or two or more adjacent coating portions and separate lubricant accommodating chambers are formed for each of the groups.

The present invention has been made in view of the above circumstances and provides a lubricant supplying device for a guiding apparatus according to claim 1 which can control as accurately as possible the amount per unit time of a lubricant to be supplied even when the amount per unit time of the lubricant to be supplied from lubricant accommodating chambers to lubricant coaters is very small and which can stably apply a predetermined amount of the lubricant to the rolling faces of a track shaft and/or a slide member from the lubricant coaters for a long period of time even when the feeder is made small in size.

Further, the present invention provides a guiding apparatus according to claim 5.

Further, according to another aspect of the present disclosure, lubricating grease for a guiding apparatus contains at least mineral oil-based and/or synthetic lubricating base oil and a thickener in an amount of 0.05 to 4 wt% in the lubricating base oil.

In the present invention, the lubricant accommodating chamber for accommodating a predetermined amount of a lubricant, which constitutes the lubricant supplying device, incorporates a grease absorber for absorbing and holding lubricating grease in order to facilitate the assembly work of the apparatus and prevent the leakage of the lubricating grease. This grease absorber is not particularly limited but preferably is composed of a fiber intertwined body manufactured by using natural fibers or synthetic fibers, or felt made of wool or rayon mixed wool and has excellent chemical resistance, particularly oil resistance, and a porosity of 60 to 95 %, preferably 70 to 90 %. When the porosity of this grease absorber is lower than 60 %, the capacity of accommodating lubricating grease becomes insufficient and when the porosity is higher than 95 %, the capability of holding lubricating grease becomes insufficient, whereby the lubricating grease flows out and a larger amount of lubricating grease than required may be supplied.

The lubricating grease stored in this lubricant accommodating chamber is guided to a surface to be coated such as the rolling faces for the rolling elements formed in the track shaft and/or the slide member of the guiding apparatus. The lubricant coater for applying the lubricating grease to this surface is not particularly limited as long as it can absorb the lubricating grease in the lubricant accommodating chamber by a capillary phenomenon and supply the lubricating grease to the surface to be coated in accordance with the consumption of the lubricating grease on the surface. Like the above grease absorber, the lubricant coater is preferably composed of a fiber intertwined body manufactured by using natural fibers or synthetic fibers, or felt made of wool or rayon mixed wool and has a porosity of 40 to 70 %, preferably 45 to 60 %. When the porosity of the lubricant coater is lower than 40 %, the capacity of accommodating the lubricating grease becomes insufficient and when the porosity is higher than 70 %, the lubricating grease hardly flows from a tank to the lubricant coater, whereby the lubricating grease may not be supplied.

In the lubricant supplying device of the present invention, it is necessary that a lubricant stored in the lubricant accommodating chambers is lubricating grease which contains 0.05 to 4 wt% of a thickener in lubricating base oil.

The lubricating base oil forming this lubricating grease may be a mineral oil-based or synthetic lubricating base oil which has been commonly used in grease for guiding apparatuses and bearings. The lubricating oil has a viscosity (40°C) of 20 to 600 cst, preferably 100 to 400 cst. When this viscosity (40°C) is lower than 20 cst, the lubricating grease flows out too much and when the viscosity is higher than 600 cst, the lubricating grease may not be supplied.

The above mineral oil-based lubricating base oil is obtained by a method which is commonly used in the lubricant oil production process of the oil refining industry. For example, the lubricating base oil is obtained by subjecting crude oil to atmospheric distillation or vacuum distillation to obtain a lubricating oil fraction and carrying out at least one treatment such as solvent removal, solvent extraction, decomposition by hydrogenation, solvent dewaxing, refining by hydrogenation, rinsing with sulfuric acid and china clay treatment to refine the lubricating oil fraction.

Examples of the above synthetic lubricating base oil include synthetic hydrocarbon oils such as poly α-olefins including polybutene, 1-octene oligomer and 1-decene oligomer, and hydrides thereof, ester-based synthetic oils such as diesters including ditridecyl glutarate, di-2-ethylhexyl adipate, diisodecyl adipate, ditridecyl adipate and di-3-ethylhexyl sebacate, and polyol esters including trimethylolpropane caprilate, trimethylolpropane pelargonate, pentaerythritol 2-ethylhexanoate and pentaerythritol pelargonate, polyglycol-based synthetic oils such as polyoxyalkylene glycol, phenylether synthetic oils such as polyphenyl ether and dialkyl diphenyl ether, silicone-based synthetic oils such as silicone oil, aromatic synthetic oils such as alkylnaphthalene and alkylbenzene, fluorine-based synthetic oils and mixed oils thereof.

The above lubricating base oil forming the lubricating grease of the present invention may optionally contain additives such as a worked penetration control agent, antioxidant, rust preventive, extreme-pressure additive, oiliness improver and abrasion reducing agent in required amounts.

The thickener forming the lubricating grease of the present invention may be what has been commonly used in grease for guiding apparatuses and bearings, as exemplified by beef tallow-based calcium soap, castor oil-based calcium soap, metal soaps such as aluminum soap, sodium soap, beef tallow-based lithium soap and castor oil-based lithium soap, composite soaps such as calcium complex, aluminum complex and lithium complex, urea-based thickeners such as aromatic diurea, aliphatic diurea, alicyclic diurea, triurea and polyurea, organic thickeners such as sodium terephthalate and PTFE, and inorganic thickeners such as organic bentonite and silica gel. Out of these, lithium soap is preferable.

In the lubricating grease of the present invention, the amount of the thickener contained in the above lubricating base oil is 0.5 to 3.5 wt%. When the amount of the thickener contained is smaller than 0.05 wt%, the amount per unit time of the lubricating grease to be supplied from the lubricant accommodating chamber to the lubricant coater, especially a small amount of the lubricant to be supplied cannot be control led accurately and the applied lubricating grease may flow out from the coated surface to stain a portion around the surface when the coated surface is inclined or vertical. When the amount contained is larger than 4 wt%, it is difficult to move the lubricating grease in the lubricant accommodating chamber to the surface to be coated by the lubricant coater smoothly at the time of use, whereby the lubricant may not be supplied in the guiding apparatus or the like.

As for the method for producing this lubricating grease, the above lubricating oil and the thickener may be basically blended together in a predetermined ratio and uniformly mixed together.
For example, a method for preparing the above lubricating grease by adding and mixing lubricating base oil which can be uniformly mixed with grease which has been used for guiding apparatuses and bearings and by adjusting the amount of the thickener to 0.05 to 4 wt% is simple and preferable.

The lower limit of worked penetration (JIS K2220 5.3) of the lubricating grease of the present invention is 410 or more when measured at 25° C for 60 strokes. As for the upper limit of worked penetration, the value obtained from a quadratic curve drawn by approximating the relationship between the actually measured content of the specific thickener and the actually measured worked penetration (JIS K2220 5.3) of the specific lubricating oil is about 550.

As for the method of constructing a lubricant supplying device by filling lubricating grease into the above lubricant accommodating chamber in the present invention, when the lubricant accommodating chamber is just a space without a grease absorber, the lubricant accommodating chamber is filled with the lubricating grease and sealed up. When the lubricant accommodating chamber has a grease absorber, the feeder is evacuated by a vacuum apparatus and the lubricating grease is sucked when the chamber is returned to atmospheric pressure, or the lubricating grease is forcedly supplied from an air hole.

The above lubricant supplying device of the present invention
is mounted to a linear guiding apparatus, curve guiding apparatus or other guiding apparatus such as a ball screw or ball spline in which a slide member and a track shaft move relative to each other by means of a rolling element such as a ball or roller. Lubricating grease is supplied to the rolling faces of the track shaft and/or the slide member, thereby supplying a lubricant to the rolling faces on the slide member side, the rolling faces on the track shaft side and a rolling element running between them.

These guiding apparatuses each include: a track shaft having rolling faces for a rolling element; a slide member which is engaged with the track shaft through the rolling element and which moves along the track shaft relative thereto; and the lubricant supplying device of the present invention which is mounted to this slide member, has lubricant accommodating chambers and lubricant coaters, and which supplies lubricating grease stored in the lubricant accommodating chambers to the rolling faces of the track shaft and/or the slide member through the lubricant coaters when the above track shaft and the slide member move relative to each other.

In the guiding apparatus of the present invention, a grease absorber is placed in the lubricant accommodating chambers to control the amount of the lubricating grease to be supplied from the above lubricant accommodating chambers to the lubricant coaters more accurately. Further, the amount of the lubricating grease to be moved from the grease absorber to the lubricant coater is limited by making the materials of the grease absorber and the lubricant coater different from each other, or an oil amount adjusting film or oil amount adjusting plate for adjusting the amount per unit time of the lubricating grease to be moved is placed between the grease absorber and the lubricant coater to limit the amount of the lubricating grease to be moved from the grease absorber to the lubricant coater, for example, as means of controlling the amount of the lubricating grease to be supplied. This makes it possible to drive the guiding apparatus maintenance-free stably and surely for a long period of time.

Since the lubricant supplying device of the present invention is filled with lubricating grease which contains 0.05 to 4 wt% of a thickener in lubricating base oil as a lubricant stored in the lubricant accommodating chambers, a predetermined amount of the lubricating grease is supplied gradually to the surface to be coated through the lubricant coaters by the action of the thickener stably for a longperiodof time. Therefore, this lubricant supplying device can be advantageously mounted not only to a large-sized guiding apparatus in which the amount of a lubricant to be supplied is relatively large and control thereof is easy in order to supply lubricating grease to the rolling faces (surface to be coated) of a track shaft and/or a slide member, but also to a relatively small-sized guiding apparatus in which the amount of the lubricant to be supplied is relatively small and the amount per unit time of the lubricant to be supplied must be controlled as accurately as possible. In addition, even when the guiding apparatus is installed at an angle or vertically so that the surface to be coated, such as the rolling faces of the track shaft and/or the slide member, is inclined or vertical, it is possible to prevent as much as possible the lubricating grease applied to the surface from flowing out from the surface to stain a portion around the surface.
Fig. 1 is an exploded and assembled perspective view of a linear guiding apparatus according to Embodiment 1 of the present invention;
Fig. 2 is an exploded and assembled perspective view of a lubricant supplying device mounted to the linear guiding apparatus of Fig. 1;
Fig. 3 is a schematic plan view of a rotary disk tester for testing the performance of a lubricant supplying device;
Fig. 4 is a partial sectional view showing the key section of Fig. 3; and
Fig. 5 is a graph showing the relationship between the traveling distance (km) and the amount of the residual lubricant (cm³) of the lubricant supplying devices of Embodiment 1 and Comparative Example 1 obtained by using the rotary disk tester shown in Fig. 3.

A preferred embodiment of the present invention will be described in detail based on embodiments, test examples and comparative examples.

### Embodiment 1

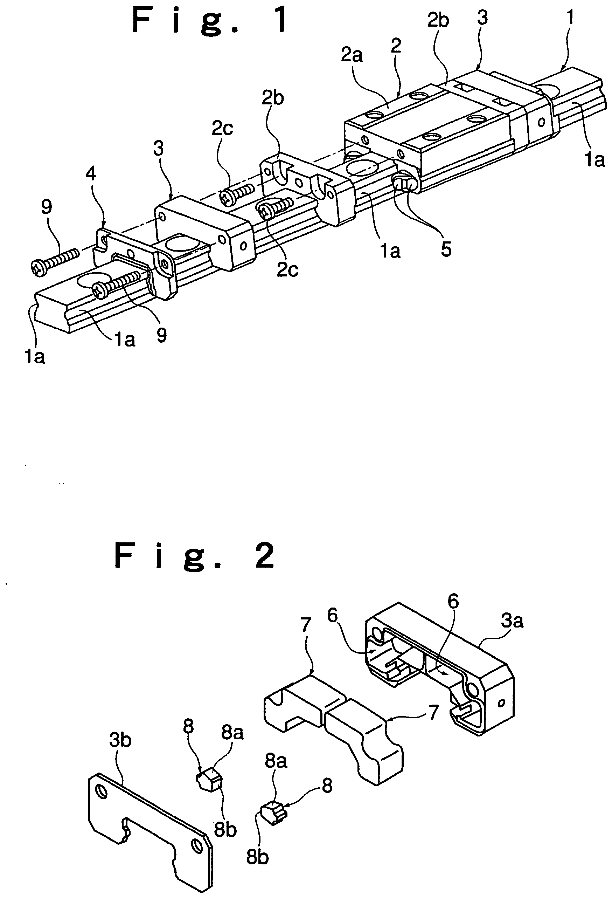

Figs. 1 and 2 show a linear guiding apparatus according to an Embodiment of the present invention and a lubricant supplying device mounted to this linear guiding apparatus.

The linear guiding apparatus of Embodiment 1 includes: a track shaft 1 having rolling faces 1a for a large number of balls (rolling elements) 5; a slide member 2 which is engaged with the track shaft 1 through the balls 5 and which moves relative to the track shaft 1 along this track shaft 1; a pair of lubricant supplying devices 3 which are mounted to both front and rear end faces in the moving direction of the slide member 2 and which supply a lubricant to the rolling faces 1a of the track shaft 1; and a pair of end seals 4 which are mounted to both front and rear end faces in the moving direction of the lubricant supplying devices 3 and are in sliding contact with the top surface and right and left side faces of the track shaft 1 in order to prevent dust and other foreign matter from entering the space between the track shaft 1 and the slide member 2.

In Embodiment 1, the slide member 2 is composed of a block body 2a which is formed substantially like a saddle having right and left side portions and has unillustratedball return holes forming one unlimited rolling face for the balls 5 in the right and left side portions, respectively, and a pair of end plates 2b which are mounted to the front and rear end faces in the moving direction of the block body 2a and have an unillustrated direction changing path forming the unlimited rolling faces for the balls 5 together with the ball return holes of the block body 2a. The end plates 2b are fixed to the front and rear end faces of the block body 2a by attachment bolts 2c to complete the slide member 2.

As shown in detail in Fig. 2, the lubricant supplying device 3 includes: a case body 3a for forming a pair of right and left lubricant accommodating chambers 6, a cover 3b which is mounted to the front face in the moving direction of the case body 3a to seal up the lubricant accommodating chambers 6, a pair of right and left grease absorbers 7, placed in the lubricant accommodating chambers 6 of the case body 3a, for absorbing unillustrated lubricating grease and holding it, and a pair of lubricant coaters 8 which are stored in lower portions of the lubricant accommodating chambers 6 of the above case body 3a, whose top surfaces 8a are in contact with the lower surfaces of the grease absorbers 7 and whose inner side faces 8b are in contact with the rolling faces 1a of the above track shaft 1. When the guiding apparatus moves reciprocally, the lubricating grease absorbed and held by the grease absorbers 7 is supplied to the rolling faces 1a of the track shaft 1 from the top surfaces 8a of the lubricant coaters 8 over the inner side faces 8b.

The lubricant supplying devices 3 are fixed to the end plates 2b of the slide member 2 by attachment bolts 8 together with the end seals 4.

In Embodiment 1, the lubricating grease absorbed and held by the grease absorbers 7 in the lubricant accommodating chambers 6 was prepared by mixing lithium soap-based grease (AFB Grease of THK Co., Ltd. having a worked penetration (JIS K2220 5.3) of 283 and unworked penetration of N/A) which comprised 85 wt% of petroleum-based refined mineral oil having a viscosity (40°C) of 184 cst, 10 wt% of lithium soap and 5 wt% of additives (antioxidant, rust preventive and extreme-pressure additive) with mineral oil-based lubricating oil having a viscosity (40°C) of 224 cst (THK QZ Oil S220 of THK Co., Ltd.) in a grease lubricating oil weight ratio of 1:2 and by adjusting the amount of a thickener (lithium soap) to 3.30 wt%. The worked penetration (JIS K2220 5.3) of the lubricating grease measured at 25°C for 60 strokes was 410 and the unworked penetration thereof was 402.

Each of the grease absorbers 7 used in Embodiment 1 is composed of a fiber intertwined material (heavily oil-impregnated fiber net) made from wool and rayon, has a volume of 0.241 cm³ and a porosity of 82 % and absorbs 0.198 cm³ of the above lubricating grease. Four grease absorbers 7 are placed in the linear guiding apparatus and hold a total of 0.792 cm³ of the lubricating grease. Each of the lubricant coaters 8 is composed of the same fiber intertwinedmaterial (high-density fiber net) as that of the grease absorbers 7, has a volume of 0.013 cm³ and a porosity of 52 % and absorbs 0.006 cm³ of the above lubricating grease. Four lubricant coaters 8 are placed in the linear guiding apparatus and hold a total of 0.024 cm³ of the lubricating grease.

### Test Example 1 (lubricant supply test)

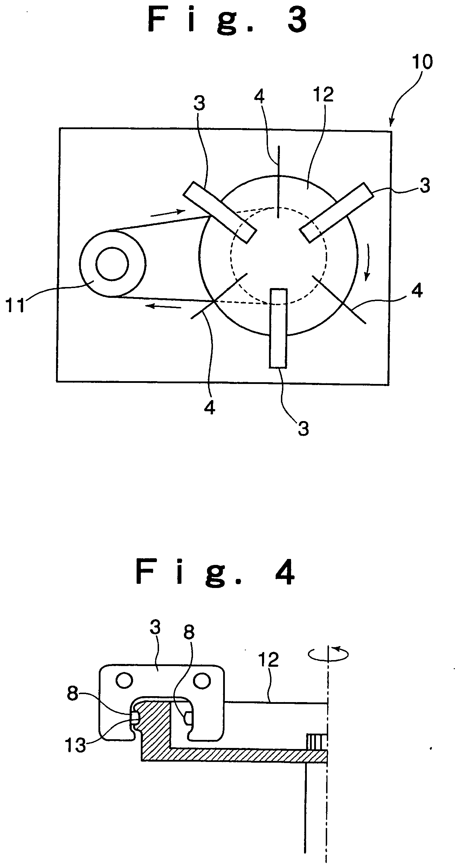

In order to confirm whether the lubricant supplying devices 3 of the linear guiding apparatus of Embodiment 1 thus obtained could supply the lubricating grease by a predetermined amount to the rolling faces 1a of the track shaft 1 stably, a rotary disk tester 10 shown in Figs. 3 and 4 was used to carry out a lubricant supply test to investigate the relationship between traveling distance (km) and the amount of the residual lubricant (cm³).

This rotary disk tester 10 is constituted such that a rotary disk 12 turned by a motor 11 is considered as the track shaft 1, three lubricant supplying devices 3 and three end seals 4 are arranged alternately around the rotary disk 12, only one of the lubricant coaters 8 of each of the lubricant supplying devices 3 is in contact with a surface 13 to be coated that is formed on the rotary disk 12, and this rotary disk 12 is turned so that lubricating grease is applied to the surface 13 of the rotary disk 12. The lubricating grease can be supplied from the lubricant coaters 8 of the lubricant supplying devices 3 to the surface 13 of the rotary disk 12 and sequentially removed by the end seals 4 by wiping it off. With a view to maintaining the viscosity of the lubricating grease at a constant value, an unillustrated thermocouple monitors the temperature of each of the lubricant supplying devices 3 so that the temperature of the lubricating grease held by the grease absorbers 7 in the lubricant supplying devices 3 can be maintained at a predetermined temperature.

In this test, the amount of the residual lubricant of each of the lubricant supplying devices 3 was obtained by the following method. The weight of the lubricant supplying device 3 before the lubricating grease was absorbed by the grease absorber 7 and the lubricant coater 8 was first measured by an electronic balance. The weight of the lubricant supplying device 3 after the lubricating grease was filled into the grease absorber 7 and the lubricant coater 8 was measured to obtain the initial amount of the lubricating grease held by the lubricant supplying device 3 (0.46 cm³ in Embodiment 1). The lubricant supplying device 3 filled with this lubricating grease was set horizontal in the rotary disk tester 10. The rotary disk 12 was turned at a revolution speed of 300 m/min at room temperature to cause the lubricant supplying device 3 to travel, during which the weight of the lubricant supplying device 3 was measured periodically to obtain the amount of the residual lubricating grease (the amount of the residual lubricant) in the lubricant supplying device 3. Then, the relationship between the traveling distance (km) and the amount of the residual lubricant (cm³) was plotted on a graph.

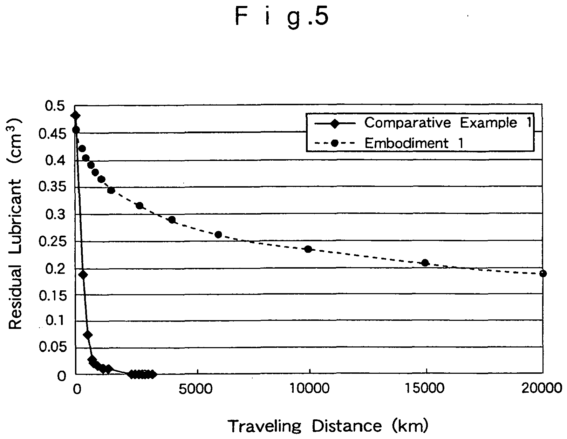

The results are shown in Fig. 5.

### Test Example 2 (lubricant flowing test)

About 0.3 g of the lubricating grease filled in the lubricant supplying devices 3 of the linear guiding apparatus of Embodiment 1 was dropped on an acrylic test plate having a length of 300 cm and a width of 150 cm whose surface had been cleaned. Then, the test plate was inclined at 65°C to measure how much the lubricating grease flew down over the surface of the test plate at a temperature of 20°C for a measurement time of 5 minutes. The flowability of the lubricating grease was thus investigated.

The flowing of the lubricating grease was not observed at all in this lubricant flowing test.

### Comparative Example 1

The same lubricating oil as that used to prepare the lubricating grease of Embodiment 1 was used as a lubricant in place of the lubricating grease of Embodiment 1. The lubricating oil was absorbed and held by the same grease absorber 7 and the same lubricant coater 8 as those in Embodiment 1 (the initial amount of the lubricant being held: 0.48 cm³). A lubricant supply test was carried out in the same manner as in Test Example 1 to investigate the relationship between traveling distance (km) and the amount of the residual lubricant (cm³). In addition, a lubricant flowing test was carried out in the same manner as in Test Example 2 to investigate the flowability of the lubricating oil.

The results of the lubricant supply test are shown in Fig. 5 together with the results of Embodiment 1.

As obvious from the results shown in Fig. 5, the lubricating oil absorbed by the grease absorber 7 and the lubricant coater 8 as a lubricant disappeared at a traveling distance of 2,000 km in Comparative Example 1 shown by a solid line whereas about 50 % of the lubricating grease remained at a traveling distance of 20,000 km, and the applying amount of the lubricating grease became substantially constant and the supply of lubricating grease was the extremely stable at a traveling distance longer than 2,000 km in Embodiment 1 shown by a broken line.

The result of the lubricant flowing test of the lubricating oil of Comparative Example 1 was 250 mm. Therefore, it was found that the lubricating oil of Comparative Example 1 flew much more easily than the lubricating grease of Embodiment 1.

### Examples 2 to 7 and Comparative Example 2

Lubricating grease having a thickener content, a worked penetration (JIS K2220 5.3; 25°C, 60 strokes) and an unworked penetration shown in Table 1 was prepared by mixing the same lithium soap-based grease (AFB grease) as that used for the preparation of the lubricating grease of Embodiment 1 with lubricating oil (QZ Oil S220)in a grease lubricating oil weight ratio shown in Table 1.

The lubricant supplying devices of Examples 2 to 7 and Comparative Example 2 were constructed in the same manner as in Embodiment 1 using the obtained lubricating greases of Examples 2 to 7 and Comparative Example 2. A lubricant supply test was carried out in the same manner as in Test Example 1 to investigate the traveling distance (km) until the amount of the residual lubricant became 50 %. Further, a lubricant flowing test was also carried out in the same manner as in Test Example 2 to investigate the flowability of the lubricating grease.

The results are shown in Table 1.

**Table 1**

| | | Grease lubricating oil weight ratio | Content of thickener (wt%) | Worked penetration | Unworked penetration | Traveling distance | Flowability |
|---|---|---|---|---|---|---|---|
| Example | 1 | 1:2 | 3.30 | 410 | 402 | 20,000 | 0 |
| | 2 | 1:1.5 | 4.0 | 391 | 390 | - | 0 |
| | 3 | 1:4 | 2.0 | 437 | 435 | - | 0 |
| | 4 | 1:9 | 1.0 | 466.8 | - | - | 10 |
| | 5 | 1:19 | 0.50 | 497.4 | - | - | 60 |
| | 6 | 1:99 | 0.10 | 564.9 | - | - | 180 |
| | 7 | 1:199 | 0.05 | 593.2 | - | - | 200 |
| Comparative Example | 1 | 0:1 | 0 | - | - | 2,000 | 250 |
| | 2 | 1:1 | 5.0 | 371 | N/A | - | 0 |
| | 3 | 1:0.66 | 6.0 | 354 | 347 | - | 0 |

| | | | | | | | |
|---|---|---|---|---|---|---|---|
| (Note) The values of worked penetration of Examples 4 to 7 are obtained from a secondary curve drawn by approximating the content (6 wt% and 8 wt%) of the thickener in Examples 1 to 3 and Comparative Example 3 and the values of worked penetration (JIS K2220 5.3). | | | | | | | |

According to the present invention, in the lubricant supplying devices of the guiding apparatus, even when the amount per unit time of the lubricant to be supplied from the lubricant accommodating chambers to the lubricant coaters is very small, the amount per unit time of the lubricant can be controlled as accurately as possible. Further, even when the lubricant supplying devices are made small in size and the amount of the lubricant to be applied is very small, the lubricant can be applied by a predetermined amount to a surface to be coated such as the rolling face of the track shaft and/or slide member of the guiding apparatus from the lubricant coaters stably for a long period of time. Furthermore, the lubricant applied to the surface can be prevented from flowing out to stain a portion around the surface as much as possible.

## Claims

1. A lubricant supplying device comprising:
lubricant accommodating chambers (6) for storing a predetermined amount of a lubricant; and
lubricant coaters (8) for guiding and applying the lubricant stored in the lubricant accommodating chambers (6) to a surface (1a) to be coated,
wherein the lubricant accommodating chamber (6) has a grease absorber (7) having a porosity of 70 to 95%,
wherein the lubricant coater (8) has a porosity of 40 to 60%,
wherein the lubricant stored in the lubricant accommodating chambers (6) is absorbed and held by the grease absorbers (7) in the lubricant accommodating chambers (6) and is supplied from the grease absorber (7) to the surface (1a) to be coated through the lubricant coaters (8), and
wherein the lubricant stored in the lubricant accommodating chambers (6) is lubricating grease which contains 0.5 to 3.5 wt% of a thickener in lubricating base oil and has worked penetration according to JIS K2220 5.3 of 410 to 550.

2. A lubricant supplying device according to claim 1, wherein the lubricating base oil has a viscosity at 40 °C of 20 to 600 cst.

3. A lubricant supplying device according to claim 1 or 2, wherein
the grease absorber (7) is composed of a fiber intertwined body manufactured by using natural fibers or synthetic fibers, or felt made of wool or rayon mixed wool, and
the lubricant coater (8) is composed of a fiber intertwined body manufactured by using natural fibers or synthetic fibers, or felt made of wool or rayon mixed wool.

4. A lubricant supplying device according to any one of claims 1, 2 or 3,
wherein the lubricant grease is prepared by adding and mixing lubricating base oil with grease and by adjusting an amount of the thickener.

5. A guiding apparatus comprising:
a track shaft (1) having rolling faces (1a) for rolling elements (5);
a slide member (2) which is engaged with the track shaft (1) through the rolling elements (5) and which moves along the track shaft (1) relative thereto; and
lubricant supplying devices (3) which are mounted to the slide member (2), which have lubricant accommodating chambers (6) and lubricant coaters (8), and which supply a lubricant stored in the lubricant accommodating chambers (6) to one of the rolling faces (1a) of the track shaft (1) and the slide member (2) through the lubricant coaters (8) when the track shaft (1) and the slide member (2) move relative to each other,
wherein the lubricant accommodating chamber (6) has a grease absorber (7) having a porosity of 70 to 95%,
wherein the lubricant coater (8) has a porosity of 40 to 60%,
wherein the lubricant stored in the lubricant accommodating chambers (6) is absorbed and held by the grease absorbers (7) in the lubricant accommodating chambers (6) and is supplied from the grease absorber (7) to the surface to be coated through the lubricant coaters (8), and
wherein the lubricant stored in the lubricant accommodating chambers (6) is lubricating grease which contains 0.5 to 3.5 wt% of a thickener in lubricating base oil and has worked penetration according to JIS K2220 5.3 of 410 to 550.

6. A guiding apparatus according to claim 5, wherein the lubricating base oil has a viscosity at 40 °C of 20 to 600 cst.

## Patentansprüche

1. Schmiermittelzuführungsvorrichtung, die aufweist:
Schmiermittelaufnahmekammern (6) zum Speichern einer vorgegebenen Menge eines Schmiermittels; und
Schmiermittelbeschichter (8) zum Führen und Auftragen des in den Schmiermittelaufnahmekammern (6) gespeicherten Schmiermittels auf eine zu beschichtende Oberfläche (1a),
wobei die Schmiermittelaufnahmekammer (6) einen Fettabsorber (7) mit einer Porosität von 70 bis 95% aufweist,
wobei der Schmiermittelbeschichter (8) eine Porosität von 40 bis 60% aufweist,
wobei das in den Schmiermittelaufnahmekammern (6) gespeicherte Schmiermittel durch die Fettabsorber (7) in den Schmiermittelaufnahmekammern (6) absorbiert und gehalten wird und aus dem Fettabsorber (7) durch die Schmiermittelbeschichter (8) der zu beschichtenden Oberfläche (1a) zugeführt wird, und
wobei das in den Schmiermittelaufnahmekammern (6) gespeicherte Schmiermittel Schmierfett ist, das 0,5 bis 3,5 Gew.-% eines Verdickungsmittels in Basisschmieröl enthält und eine Walkpenetration gemäß JIS K2220 5.3 von 410 bis 550 aufweist.

2. Schmiermittelzuführungsvorrichtung nach Anspruch 1, wobei das Basisschmieröl bei 40°C eine Viskosität von 20 bis 600 cst aufweist.

3. Schmiermittelzuführungsvorrichtung nach Anspruch 1 oder 2, wobei der Fettabsorber (7) aus einem faserverflochtenen Körper, der unter Verwendung von Naturfasern oder Kunstfasern hergestellt ist, oder aus einem aus Wolle oder aus mit Rayon vermischter Wolle hergestellten Filz besteht, und
der Schmiermittelbeschichter (8) aus einem faserverflochtenen Körper, der unter Verwendung von Naturfasern oder Kunstfasern hergestellt ist, oder aus einem aus Wolle oder aus mit Rayon vermischter Wolle hergestellten Filz besteht.

4. Schmiermittelzuführungsvorrichtung nach einem der Ansprüche 1, 2 oder 3,
wobei das Schmiermittelfett durch Hinzufügen und Mischen des Basisschmieröls mit Fett und durch Einstellen einer Menge des Verdickungsmittels hergestellt wird.

5. Führungsvorrichtung, die aufweist:
einen Schienenschaft (1), der Rollflächen (1a) für Rollelemente (5) aufweist;
ein Gleitelement (2), das durch die Rollelemente (5) mit dem Schienenschaft (1) in Eingriff steht und sich längs des Schienenschafts (1) relativ dazu bewegt; und
Schmiermittelzuführungsvorrichtungen (3), die an dem Gleitelement (2) angebracht sind, die Schmiermittelaufnahmekammern (6) und Schmiermittelbeschichter (8) aufweisen, und ein in den Schmiermittelaufnahmekammern (6) gespeichertes Schmiermittel einer der Rollflächen (1a) des Schienenschafts (1) und dem Gleitelement (2) durch die Schmiermittelbeschichter (8) zuführen, wenn sich der Schienenschaft (1) und das Gleitelement (2) relativ zueinander bewegen,
wobei die Schmiermittelaufnahmekammer (6) einen Fettabsorber (7) mit einer Porosität von 70 bis 95% aufweist,
wobei der Schmiermittelbeschichter (8) eine Porosität von 40 bis 60% aufweist,
wobei das in den Schmiermittelaufnahmekammern (6) gespeicherte Schmiermittel durch die Fettabsorber (7) in den Schmiermittelaufnahmekammern (6) absorbiert und gehalten wird und aus dem Fettabsorber (7) durch die Schmiermittelbeschichter (8) der zu beschichtenden Oberfläche zugeführt wird, und
wobei das in den Schmiermittelaufnahmekammern (6) gespeicherte Schmiermittel Schmierfett ist, das 0,5 bis 3,5 Gew.-% eines Verdickungsmittels in Basisschmieröl enthält und eine Walkpenetration gemäß JIS K2220 5.3 von 410 bis 550 aufweist.

6. Führungsvorrichtung nach Anspruch 5, wobei das Basisschmieröl bei 40°C eine Viskosität von 20 bis 600 cst aufweist.

## Revendications

1. Dispositif d'alimentation en lubrifiant comprenant :
des chambres à lubrifiant (6) destinées à stocker une quantité de lubrifiant définie ; et
des enducteurs de lubrifiant (8) destinés à guider et à appliquer le lubrifiant stocké dans les chambres à lubrifiant (6) sur une surface (la) à revêtir,
où la chambre à lubrifiant (6) comporte un absorbeur de graisse (7) présentant une porosité comprise entre 70 et 95 %,
où l'enducteur de lubrifiant (8) présentant une porosité comprise entre 40 et 60 %,
où le lubrifiant stocké dans les chambres à lubrifiant (6) est absorbé et maintenu dans les chambres à lubrifiant (6) par les absorbeurs de graisse (7) et est refoulé de l'absorbeur de graisse (7) vers la surface (1a) à revêtir par les enducteurs de lubrifiant (8), et
où le lubrifiant stocké dans les chambres à lubrifiant (6) est de la graisse lubrifiante contenant entre 0,5 et 3,5 % en poids d'un épaississant dans l'huile de base lubrifiante et présentant une pénétration traitée suivant JIS K2220 5.3 comprise entre 410 et 550.

2. Dispositif d'alimentation en lubrifiant selon la revendication 1, où l'huile de base lubrifiante a une viscosité comprise entre 20 et 600 est à 40 ° C.

3. Dispositif d'alimentation en lubrifiant selon la revendication 1 ou la revendication 2, où l'absorbeur de graisse (7) est constitué d'un corps de fibres entrelacées fabriqué avec des fibres naturelles ou synthétiques, ou en feutre de laine ou de laine mélangée à de la rayonne, et
où l'enducteur de lubrifiant (8) est constitué d'un corps de fibres entrelacées fabriqué avec des fibres naturelles ou synthétiques, ou en feutre de laine ou de laine mélangée à de la rayonne.

4. Dispositif d'alimentation en lubrifiant selon l'une des revendications 1, 2 ou 3,
où la graisse lubrifiante est préparée en ajoutant et mélangeant de l'huile de base lubrifiante avec de la graisse et en ajustant la quantité de l'épaississant.

5. Appareil de guidage comprenant :
un axe à glissière (1) présentant des faces de roulement (1a) pour des éléments de roulement (5) ;
un élément coulissant (2) en contact avec l'axe à glissière (1) par les éléments de roulement (5) et mobile par rapport à l'axe à glissière (1) le long de celui-ci ; et
des dispositifs d'alimentation en lubrifiant (3) montés sur l'élément coulissant (2), comprenant des chambres à lubrifiant (6) et des enducteurs de lubrifiant (8), et alimentant en lubrifiant stocké dans les chambres à lubrifiant (6) une des faces de roulement (1a) de l'axe à glissière (1) et l'élément coulissant (2) par les enducteurs de lubrifiant (8), quand l'axe à glissière (1) et l'élément coulissant (2) se déplacent l'un par rapport à l'autre,
où la chambre à lubrifiant (6) comporte un absorbeur de graisse (7) présentant une porosité comprise entre 70 et 95 %,
où l'enducteur de lubrifiant (8) présente une porosité comprise entre 40 et 60 %,
où le lubrifiant stocké dans les chambres à lubrifiant (6) est absorbé et maintenu dans les chambres à lubrifiant (6) par les absorbeurs de graisse (7) et est refoulé de l'absorbeur de graisse (7) vers la surface à revêtir par les enducteurs de lubrifiant (8), et
où le lubrifiant stocké dans les chambres à lubrifiant (6) est de la graisse lubrifiante contenant entre 0,5 et 3,5 % en poids d'un épaississant dans l'huile de base lubrifiante et présentant une pénétration traitée suivant JIS K2220 5.3 comprise entre 410 et 550.

6. Appareil de guidage selon la revendication 5, où l'huile de base lubrifiante a une viscosité comprise entre 20 et 600 est à 40° C.
